# FASCICULE DE BREVET EUROPEEN

(11) **EP 0 509 880 B1**
(45) Date de publication et mention de la délivrance du brevet: **26.10.1994**
(21) Numéro de dépôt: 92400980.6
(22) Date de dépôt: 08.04.1992
(51) Int. Cl.: F16D 55/40, F16D 65/12

(54) **Frein à disques pour roue**
Mehrscheibenbremse für ein Rad
Multiple disc brake for a wheel

(30) Priorité: 19.04.1991 FR 9104850
(43) Date de publication de la demande: 21.10.1992
(73) Titulaire: AEROSPATIALE Société Nationale Industrielle, 75781 Paris Cédex 16 (FR)
(72) Inventeur: Chareire, Jean-Louis, F-92300 Levallois Perret (FR)
(74) Mandataire: Bonnetat, Christian

(56) Documents cités:
- EP-A- 0 260 412
- EP-A- 0 296 667
- US-A- 3 951 240
- PATENT ABSTRACTS OF JAPAN vol. 9, no. 213 (M-408)(1936) 30 Août 1985 & JP-A-60073134

## Description

La présente invention concerne un frein à disques pour roue. Quoique non exclusivement, le frein conforme à la présente invention est particulièrement approprié à être utilisé pour le freinage des roues des camions poids lourds.

On sait que les freins à disques pour roue comportent un ou plusieurs disques, solidaires en rotation de ladite roue, ainsi qu'un vérin pouvant appliquer une pression axiale sur les disques, afin de freiner la roue. Généralement, lorsque le frein comporte plusieurs disques, au moins certains d'entre eux, bien que solidaires en rotation de la roue, sont montés de façon à pouvoir coulisser parallèlement à l'axe de ladite roue.

On connaît essentiellement deux sortes de freins à disques en ce qui concerne leurs matières constitutives, à savoir les freins à disques métalliques et les freins à disques de carbone.

Dans les freins à disques métalliques, lesdits disques sont réalisés en acier, en fonte, en cuivre, etc ... et le vérin presse lesdits disques par l'intermédiaire de garnitures de freinage, par exemple réalisées en résine phénolique et fibres d'amiante, en un composé vitrifié, en un composé céramique-métal, etc ... Dans les freins à disques de carbone, lesdites garnitures de freinage sont également réalisées en carbone.

Chacune de ces deux sortes de freins à disques comporte ses avantages et ses inconvénients.

Dans les freins à disques métalliques, la performance à l'usure est bonne à faible puissance par cm² et le coût du matériau des garnitures est faible. En revanche :
- les performances à l'usure se dégradent beaucoup pour des freinages de forte puissance par cm²;
- le stockage d'énergie est faible à masse donnée en raison de la chaleur spécifique et de la réfractairité faible du matériau des garnitures et des disques.

Dans les freins à disques et garnitures de carbone :
- la performance à l'usure est du même ordre que celle des garnitures des freins à disques métalliques pour les faibles puissances par cm² ;
- la performance à l'usure est considérablement plus élevée que celle des garnitures des freins à disques métalliques pour les fortes puissances par cm² ; et
- le stockage d'énergie à masse égale est grand grâce à la réfractairité et à la haute chaleur spécifique du carbone.

En revanche, le coût du carbone est élevé, de sorte que chaque freinage est coûteux.

La présente invention a pour objet de remédier à ces inconvénients et elle concerne un frein à disques présentant les avantages cumulés des freins à disques métalliques et à disques de carbone, sans en comporter les inconvénients.

A cette fin, selon l'invention, le frein de roue comportant :
- au moins un disque de freinage métallique et au moins un disque de freinage en carbone ;
- une alimentation en fluide de freinage sous pression ;
et
- un système de pression relié à ladite alimentation en fluide de freinage et agissant sur lesdits disques de freinage ;
est remarquable :
- en ce que ledit système de pression comporte un premier et un second vérins, lesdits vérins étant respectivement associés audit disque métallique et audit disque en carbone et les pistons desdits vérins pouvant être soumis à l'action de moyens élastiques de rappel respectifs tendant à écarter lesdits pistons desdits disques ;
- en ce que lesdits premier et second vérins sont alimentés en fluide de freinage, à partir de ladite alimentation, par l'intermédiaire de liaisons respectives en parallèle ; et
- en ce que des moyens d'interruption de communication, sensibles à l'action de la pression dudit fluide de freinage, sont disposés sur la liaison reliant ladite alimentation audit premier vérin associé audit disque métallique, pour ne permettre la communication entre ledit premier vérin et ladite alimentation que lorsque la pression dudit fluide de freinage est inférieure à un seuil de pression limite.

Ainsi, en choisissant de façon appropriée ledit seuil de pression déterminé, le frein de roue selon l'invention :
- effectue les freinages les plus fréquents (de basse énergie et de basse puissance) avec le disque métallique, ce qui est performant et peu coûteux, le disque de carbone n étant alors pas actionné, car l'usage du disque de carbone serait onéreux pour ces conditions de freinage ; et
- effectue les freinages les moins fréquents (de haute énergie et de haute puissance) avec le disque de carbone, l'usage de ce dernier étant donc rare et, par suite, suffisamment économique, le disque métallique étant alors actionné à une pression limitée, ce qui évite la destruction des garnitures associées.

On voit donc que le frein conforme à la présente invention met en oeuvre une solution mixte de freinage (disque métallique et disque de carbone) permettant d'utiliser à bon escient, d'une part les garnitures du disque métallique, d'autre part les garnitures de carbone, garnitures dont les performances optimales ne correspondent pas aux mêmes conditions d'emploi. La solution mixte de freinage de l'invention est favorable aussi bien en ce qui concerne les coûts, la masse ou l'encombrement que la gestion de l'énergie et la puissance de freinage. Elle est donc particulièrement applicable aux camions poids lourds dont l'augmentation de vitesse commerciale dépend étroitement des capacités de freinage de leurs freins.

On remarquera que le brevet US-A-3 951 240 décrit déjà un frein de roue du type décrit dans le préambule de la revendication 1. Cependant, la particularité essentielle de ce document antérieur ne concerne que la disposition relative des disques métalliques et des disques de carbone à l'intérieur dudit frein pour éviter que ces derniers disques puissent être mouillés, ce qui réduirait leur efficacité de freinage.

Dans un mode de réalisation particulièrement simple de la présente invention, lesdits moyens d'interruption de communication peut être formés par une soupape ou analogue, chargée par un ressort de rappel tendant à écarter ladite soupape de son siège.

Ainsi, lorsque le fluide de freinage est appliqué à ladite soupape, celle-ci reste ouverte tant que ledit fluide exerce sur la soupape une force inférieure à la force antagoniste appliquée par ledit ressort de rappel. Dès que la force due à la pression du fluide dépasse celle du ressort de rappel, la soupape se ferme, interrompant la communication entre l'alimentation en fluide de freinage et le vérin associé au disque métallique. Inversement, lorsque la force exercée par la pression du fluide décroît, pour redevenir inférieure à celle du ressort de rappel, ladite soupape s'ouvre de nouveau.

La soupape agit donc comme un limiteur de pression qui bloque le débit de fluide de freinage vers le vérin associé au disque métallique, si la pression de freinage dépasse la valeur de tarage définie par ledit ressort de rappel.

Ce mode de réalisation simple présente donc les avantages suivants :
- limitation de la puissance qu'on peut exercer par cm² sur les garnitures associées au disque métallique et donc élimination des cas d'usure très rapide desdites garnitures ;
- limitation de l'énergie stockée dans le disque métallique par rapport à celle stockée dans le disque de carbone à chaque fois que la pression du fluide de freinage dépasse la pression limite. On remarquera que, pour favoriser la préservation des garnitures associées au disque métallique, on a intérêt, dans le cas où un seul des disques est fixe en coulissement, à ce que ce soit le disque métallique, afin que le débit d'évacuation de chaleur dans la roue soit meilleur. Cependant, ce n'est pas une obligation ;
- l'impossibilité de dégrader thermiquement les garnitures associées au disque métallique sur une épaisseur importante, en cas de freinage très prolongé, car une diminution d'épaisseur entraîne du même coup une cessation de l'effort du vérin à condition que le limiteur de pression soit concerné. Ce dernier limite en effet la pression par cessation du débit du fluide de freinage ;
- possibilité d'utiliser, pour le disque métallique, des garnitures dont le coefficient de frottement diminue beaucoup avec la température, de façon à diminuer la puissance de freinage (à pression égale de vérin) sur ces garnitures et à réduire leur augmentation de température. Cette particularité très courante des garnitures de freins est très facile à obtenir et est habituellement considérée comme un défaut. Dans le même temps, la puissance de freinage reçue par le carbone s'accentue pour compenser.

Toutefois, dans ce mode de réalisation simple, on remarquera que le second vérin associé au disque de carbone est alimenté en fluide de freinage, même aux faibles pressions de celui-ci. Aussi, pour éviter les coûts d'utilisation du frein, il est avantageux que lesdits moyens élastiques de rappel du piston dudit second vérin, associé au disque en carbone, soient tarés pour que le piston dudit second vérin ne soit pressé contre ledit disque en carbone qu'à partir d'une valeur de pression du fluide de freinage à peu près égale audit seuil de pression limite.

Ainsi, le disque et les garnitures de carbone n'exercent pas d'action de freinage à basse pression et n'interviennent qu'à partir du moment où le disque métallique et les garnitures associées vont être isolées de l'alimentation en fluide de freinage sous pression par lesdits moyens d'interruption de communication.

Dans une variante plus complète du frein de roue conforme à l'invention, lesdits moyens d'interruption de communication comportent de plus des moyens ne permettant le passage du fluide de freinage sous pression vers ledit second vérin associé au disque de carbone que lorsque la pression dudit fluide de freinage est à peu près égale audit seuil de pression limite.

Ainsi, les garnitures en carbone ne peuvent pas entrer en jeu au-dessous du seuil de pression limite, c'est-à-dire pour des freinages de faible puissance qui sont alors uniquement assurés par les garnitures associées au disque métallique.

Avantageusement, dans cette dernière variante de réalisation, lesdits moyens d'interruption de communication comportent un clapet poussé par un léger ressort soumis, dans le sens de la fermeture, à l'action de la pression du fluide de freinage et obturant un passage reliant ladite liaison associée audit second vérin à ladite alimentation lorsque la pression est inférieure à la valeur minimale requise pour l'alimentation du second vérin.

Ainsi, ledit clapet permet la décharge du circuit dudit second vérin, sous l'action des moyens élastiques de rappel associés au piston de ce dernier vérin, lorsque les conditions de pression le permettent.

Toutefois, si, lors d'un freinage à forte pression, on met en jeu les garnitures en carbone, celles-ci restent en action même si la pression redescend au-dessous de la pression limite, tant que la pression exerce une action plus forte que lesdits moyens élastiques de rappel. Cet aspect est sans inconvénient pour l'usure du carbone, car c'est essentiellement au début du freinage que se produit l'usure desdites garnitures de carbone.

Les avantages supplémentaires de cette deuxième forme de l'invention, par rapport à la première, sont :
- usage peu fréquent du disque en carbone, donc forte économie ;
- possibilité d'utiliser le carbone pour stocker la chaleur en descente longue, mais de faible pente, donc nécessitant une faible puissance de freinage. En effet, il suffit que le conducteur du véhicule comportant le frein, constatant la longueur d'une descente, augmente un court instant la pression de freinage pour mettre en jeu le carbone qui, restant alors en action pour une faible puissance, participera au stockage d'énergie conjointement aux garnitures associées au disque métallique ;
- même avantage que l'alinéa précédent sans nécessité d'intervention spéciale du conducteur, si ledit moyen de communication avec ledit second vérin comporte une fuite faible mais précise (par exemple audit clapet), de sorte que, si la durée d'un freinage à basse pression se prolonge au-delà d'un certain temps (par exemple 10 à 20 secondes), le disque de carbone soit automatiquement mis en jeu.

Cette dernière forme de l'invention répond donc bien à toutes les conditions nécessaires pour un freinage optimal avec un système de garnitures mixtes.

De préférence, lesdits moyens d'interruption de communication comportent, dans ce cas, un organe mobile de distribution de fluide disposé à l'intérieur d'un logement relié, d'une part, à ladite alimentation en fluide de freinage et, d'autre part, auxdites liaisons associées auxdits premier et second vérins. Il est alors avantageux que ledit passage et ledit clapet associé soient disposés dans ledit organe mobile de distribution de fluide.

Dans le cadre de l'invention, il est possible que les deux disques soient fixes par rapport à la roue ou que l'un d'eux soit coulissant parallèlement à l'axe de cette dernière. Dans le premier cas, les deux étriers porte-vérin usuels nécessaires doivent pouvoir coulisser indépendamment l'un de l'autre sur un axe parallèle à celui de la roue, notamment pour la compensation des usures.

Dans le second cas, les deux étriers porte-vérin peuvent être groupés en un seul (ce qui gagne du poids), celui-ci étant également coulissant sur un axe parallèle à celui de la roue. Il est alors de plus avantageux que lesdits moyens d'interruption de communication soient portés par ledit étrier unique. L'encombrement est alors minimal et une seule canalisation de fluide de freinage sous pression a besoin d'aboutir audit étrier unique.

Les figures du dessin annexé feront bien comprendre comment l'invention peut être réalisée. Sur ces figures, des références identiques désignent des éléments semblables.

La figure 1 montre schématiquement un exemple de réalisation du frein conforme à la présente invention.

La figure 2 illustre schématiquement en coupe un premier mode de réalisation de l'alimentation en fluide hydraulique sous pression du frein de la figure 1.

Les figures 3 et 4 illustrent schématiquement en coupe un second mode de réalisation de l'alimentation en fluide hydraulique sous pression du frein de la figure 1, ce second mode de réalisation étant représenté respectivement en position correspondant au freinage à l'aide du disque métallique (figure 3) et en position correspondant au freinage à l'aide du disque de carbone (figure 4).

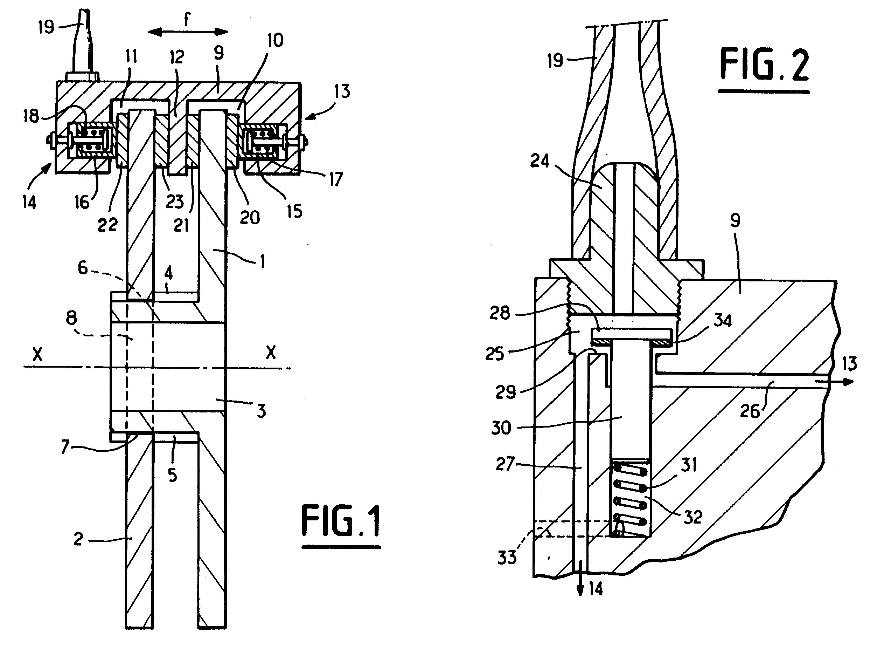

L'exemple de réalisation du frein conforme à la présente invention, représenté schématiquement sur la figure 1, comporte un disque métallique 1 (en acier, en fonte, en cuivre, etc ...) et un disque en carbone 2. Le disque métallique 1 est solidaire du moyeu 3 d'une roue (non représentée) d'axe X-X, tandis que le disque carbone 2 est solidaire en rotation dudit moyeu 3, tout en pouvant coulisser le long de ce dernier, grâce à des moyens connus comportant un jeu de cannelures 4 et de rainures 5 axiales, portées par ledit moyeu 3 et coopérant respectivement avec des échancrures 6 et des dents 7, réparties à la périphérie d'un évidement central 8 dudit disque en carbone 2 traversé par le moyeu 3. Les axes des disques 1 et 2 sont confondus avec l'axe X-X de la roue.

Le frein montré par la figure 1 comporte de plus un étrier non rotatif 9, monté dans une glissière (non représentée) de façon à pouvoir coulisser parallèlement à l'axe X-X de la roue (flèches f). Dans l'étrier 9 sont ménagés deux logements ouverts 10 et 11, séparés par une cloison 12 et dans lesquels sont engagées, respectivement, les périphéries des disques 1 et 2.

En regard de la cloison 12, du côté du logement 10 opposé à ladite cloison, un vérin 13 est agencé dans l'étrier 9. De même, en regard de la cloison 12, du côté du logement 11 opposé à ladite cloison, un vérin 14 est agencé dans l'étrier 9. Aux pistons 15 et 16 des vérins 13 et 14 sont respectivement associés des ressorts de rappel 17 et 18. Les vérins 13 et 14 sont alimentés en fluide hydraulique de freinage à travers une canalisation souple 19.

En regard de la périphérie du disque métallique 1 pénétrant dans le logement 10, sont prévues des garnitures de freinage 20 et 21, respectivement portées par le piston 15 et par la cloison 12. Les garnitures de freinage 20 et 21 sont par exemple en résine phénolique et fibres d'amiante, en un composé vitrifié ou céramique-métal, ou en toute autre matière usuelle mise en oeuvre pour coopérer avec un disque de freinage métallique. De même, en regard de la périphérie du disque de carbone 2 pénétrant dans le logement 11, sont prévues des garnitures de freinage en carbone 22 et 23, respectivement portées par le piston 16 et par la cloison 12.

Comme on peut le voir dans l'exemple de réalisation de la figure 2, la canalisation souple 19 débouche, par l'intermédiaire d'un embout 24, dans une chambre 25 pratiquée dans l'étrier 9. La chambre 25 est reliée aux vérins 13 et 14, respectivement par des conduits 26 et 27. De plus, la communication entre la chambre 25 et le conduit 26 est commandée par une soupape, dont la tête 28 se trouve dans ladite chambre 25 et qui peut coopérer avec un siège 29. La tige 30 de ladite soupape assure le guidage en coulissement de celle-ci. Un ressort 31, logé dans une chambre 32 mise à l'atmosphère par un évent 33, tend à écarter la tête de soupape 28 de son siège 29. Une garniture d'étanchéité 34 peut être disposée sur la face de la tête de soupape 28 dirigée vers le siège 29.

Ainsi, lorsqu'un opérateur actionne l'organe d'actionnement du frein (non représenté), par exemple une pédale, il engendre de façon connue une augmentation de pression du fluide hydraulique dans la canalisation souple 19. Tant que la pression dudit fluide hydraulique est suffisamment basse pour exercer sur la tête 28 de la soupape une force inférieure à celle exercée par le ressort 31, la soupape 28,30 reste ouverte et du fluide hydraulique sous pression est adressé, respectivement à travers les canalisations 26 et 27, aux vérins 13 et 14. Ceux-ci actionnent alors simultanément leurs pistons 15 et 16 et le freinage de la roue est obtenu par action simultanée sur les disques 1 et 2 (situation représentée sur la figure 1). Dès que la pression du fluide hydraulique a atteint un seuil limite suffisamment élevé pour que la force exercée par ce dernier sur la soupape soit supérieure à celle exercée par le ressort 31, la soupape 28 se ferme, le joint 34 étant en appui contre le siège 29. On voit que ce seuil limite est déterminé par le ressort 31. A partir de ce moment, seul le vérin 14 est alimenté en fluide hydraulique et le freinage supplémentaire résulte de la seule action dudit vérin 14 sur le disque de carbone 2. Lorsque l'opérateur cesse son action sur l'organe d'actionnement du frein, la pression du fluide hydraulique décroît, de sorte que la soupape 28,30 peut de nouveau s'ouvrir sous l'action du ressort 31 dès que la force exercée par le fluide hydraulique sur ladite soupape redevient inférieure à l'action dudit ressort.

Si l'on désire que le disque de carbone n'intervienne pas pour des pression du fluide hydraulique inférieures audit seuil approximativement, il suffit de tarer le ressort 18 de façon que l'action de celui-ci ne permette le déplacement du piston 16 que pour des pressions du fluide hydraulique à peu près égales à ce seuil.

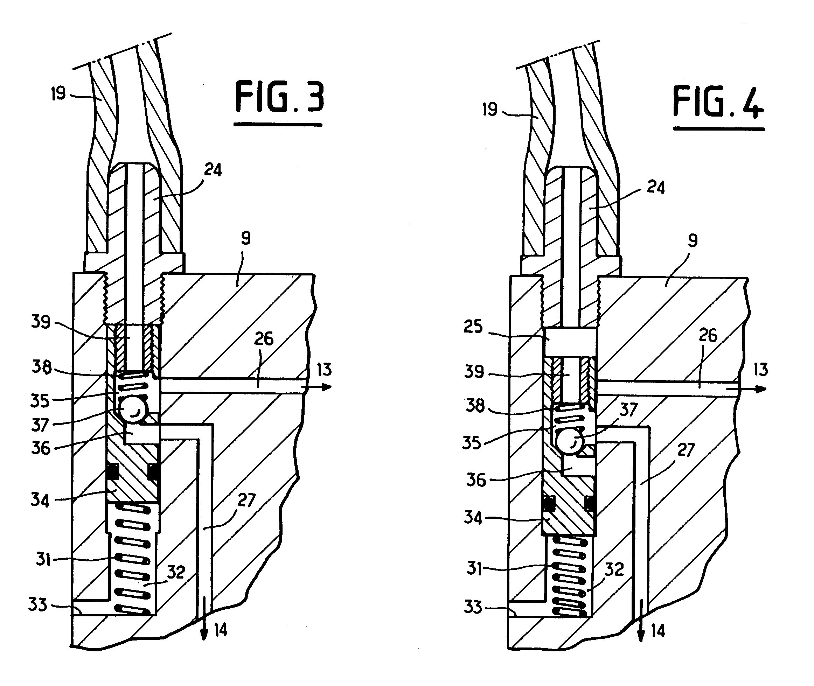

Dans la variante de réalisation des figures 3 et 4, on retrouve les éléments 9, 19, 24, 25, 26, 27, 31, 32 et 33 de la figure 2. Toutefois, dans ce cas, la chambre 25 est réalisée sous la forme d'un cylindre de piston. Dans la chambre 25 peut se déplacer un piston 34, remplaçant la soupape 28,30 et soumis à l'action du ressort 31.

Le piston 34 comporte deux chambres internes 35 et 36, ouvertes à la périphérie dudit piston et séparées l'une de l'autre par un clapet 37, chargé par un faible ressort disposé dans la chambre 35. Un conduit 39, interne au piston 34, assure la communication entre la chambre 35 et la canalisation 19.

A l'intérieur de la chambre 25, le piston 34 peut se déplacer entre deux positions extrêmes.

Dans la première de ces positions extrêmes, montrée par la figure 3, le ressort 31 présente sa longueur maximale et les chambres 35 et 36 se trouvent respectivement en communication avec les conduits 26 et 27. Dans la seconde desdites positions extrêmes (voir la figure 4), le ressort 31 présente sa longueur minimale et la conduite 26 est obturée par le piston 34, tandis que le conduit 27 est en communication avec la chambre 35 et que la chambre 36 est obturée par la paroi de la chambre 25.

Ainsi, lorsqu'un opérateur actionne l'organe d'actionnement (non représenté) du frein, la pression du fluide hydraulique engendrée dans la canalisation souple 19 est transmise au vérin 13, à travers le conduit 39, la chambre 35 et le conduit 26. Seul le disque métallique 1 intervient dans le processus de freinage, tant que la pression du fluide exerce sur le piston 34 une force inférieure à celle exercée par le ressort 31 (voir la figure 3), puisqu'alors le conduit 27 est isolé de la chambre 35 par le clapet 37.

Au contraire, si la pression du fluide hydraulique dépasse un seuil limite déterminé par le ressort 31, le piston 34 est repoussé par ledit fluide, jusqu'à obturer le conduit 26 et mettre en communication le conduit 27 avec la chambre 35, recevant la pression hydraulique par le conduit 39 (voir la figure 4). Dans ce cas, seul le disque de carbone 2 participe à l'augmentation du freinage, le disque métallique continuant à fournir un couple à peu près constant.

Si l'organe d'actionnement du frein est relâché, le conduit 27 est de nouveau obturé (figure 3) et l'équilibre des pressions entre le conduit 27 et la chambre 35 s'effectue à travers le clapet 37 qui s'ouvre à l'encontre de l'action du ressort 38.

Bien entendu, la longueur axiale de l'ouverture latérale de la chambre 35, dirigée vers les conduits 26 et 27, détermine la progressivité de mise en action du freinage à l'aide du disque en carbone 2 par rapport à la mise en limitation d'action du disque métallique 1.

On remarquera que, de plus, le frein des figures 3 et 4 présente l'avantage de permettre la mise en jeu du disque de carbone 2 pour un freinage de longue durée (donc très énergétique), même si la pression de freinage nécessitée est faible. Il suffit en effet de freiner plus fort pendant un temps très court pour pouvoir utiliser ensuite le carbone à plus faible pression et le faire participer au stockage de l'énergie en longue descente. En effet, dans ce cas, la pression reste élevée dans la chambre 35, de sorte que le clapet 37 ne permet pas la décharge du conduit 27.

La mise en jeu du disque de carbone dans les longues descentes de faible pente ne nécessitant pas l'usage d'une pression supérieure au seuil prévu pour ce disque, peut aussi s'effectuer, selon l'invention, grâce à un passage permanent de très faible section pratiqué par exemple dans le clapet 37.

De cette façon, le disque de carbone ne peut pas être mis en jeu par les coups de frein de courte durée, donc les plus fréquents, dont la pression est inférieure au seuil requis, mais il l'est automatiquement si la durée de ces faibles freinages se prolonge.

Il va de soi que, quel que soit l'état de détérioration thermique ou mécanique des disques ou des garnitures, la course des pistons 15 et 16 est limitée par des butées (non représentées) afin qu'ils ne puissent sortir de leurs cylindres et engendrer une grave fuite de fluide hydraulique.

Ainsi, et grâce au dispositif selon l'invention, la sécurité du freinage sur la roue est accentuée. En effet, en cas de disparition des garnitures de carbone 22 et 23, les garnitures 20 et 21 resteront efficaces et vice-versa.

Les dispositifs décrits ci-dessous ne sont pas limitatifs. En effet, le frein selon l'invention pourrait comporter plusieurs disques métalliques et/ou plusieurs disques en carbone (actionnés alors avec des vérins agissant simultanément sur les matériaux de même catégorie) et les différents disques (carbone et métalliques) pourraient être actionnés par des étriers coulissants indépendants.

## Revendications

1. Frein de roue comportant :
- au moins un disque de freinage métallique (1) et au moins un disque de freinage en carbone (2) ;
- une alimentation (19) en fluide de freinage sous pression ; et
- un système de pression (9,13,14) relié à ladite alimentation (19) en fluide de freinage et agissant sur lesdits disques de freinage (1,2) ;
caractérisé :
- en ce que ledit système de pression comporte un premier (13) et un second (14) vérins, lesdits vérins étant respectivement associés audit disque métallique (1) et audit disque en carbone (2) et les pistons (15,16) desdits vérins (13,14) pouvant être soumis à l'action de moyens élastiques de rappel respectifs (17,18) tendant à écarter lesdits pistons desdits disques ;
- en ce que lesdits premier et second vérins sont alimentés en fluide de freinage, à partir de ladite alimentation (19), par l'intermédiaire de liaisons respectives (26,27) en parallèle ; et
- en ce que des moyens d'interruption de communication (28,29,30-34 à 39), sensibles à l'action de la pression dudit fluide de freinage, sont disposés sur la liaison (26) reliant ladite alimentation (19) audit premier vérin (13) associé audit disque métallique (1), pour ne permettre la communication entre ledit premier vérin (13) et ladite alimentation (19) que lorsque la pression dudit fluide de freinage est inférieure à un seuil de pression limite.

2. Frein de roue selon la revendication 1,
caractérisé en ce que lesdits moyens d'interruption de communication sont formés par une soupape ou analogue (28,30), chargée par un ressort (31) tendant à écarter ladite soupape de son siège (29).

3. Frein de roue selon la revendication 2,
caractérisé en ce que lesdits moyens élastiques (18) de rappel du piston (16) dudit second vérin (14), associé audit disque en carbone (2), sont tarés pour que ledit piston (16) dudit second vérin (14) ne soit pressé contre ledit disque en carbone (2) qu'à partir d'une valeur de pression du fluide de freinage à peu près égale audit seuil de pression limite.

4. Frein de roue selon la revendication 1,
caractérisé en ce que lesdits moyens d'interruption de communication (34) comportent de plus des moyens (35,36,37) ne permettant le passage du fluide de freinage sous pression vers ledit second vérin associé audit disque de carbone que lorsque la pression dudit fluide de freinage est à peu près égale audit seuil de pression limite.

5. Frein de roue selon la revendication 4,
caractérisé en ce que lesdits moyens d'interruption de communication (34) comportent un clapet (37) poussé par un léger ressort (38) soumis, dans le sens de la fermeture, à l'action de la pression du fluide de freinage et obturant un passage (36) reliant la liaison associée audit second vérin à ladite alimentation, lorsque la pression est inférieure à la valeur minimale requise pour l'alimentation du second vérin.

6. Frein de roue selon la revendication 4,
caractérisé en ce que lesdits moyens d'interruption de communication comportent un organe mobile de distribution (34) disposé à l'intérieur d'un logement (25) relié, d'une part, à ladite alimentation en fluide de freinage (19) et, d'autre part, auxdites liaisons (26,27) associées auxdits premier et second vérins.

7. Frein de roue selon la revendication 4,
caractérisé en ce que lesdits moyens (35,36,37) ne permettant le passage du fluide de freinage sous pression vers ledit second vérin associé audit disque de carbone que lorsque la pression dudit fluide de freinage est à peu près égale audit seuil de pression limite, comportent néanmoins un passage hydraulique de très faible section destiné à annuler leur action si la durée de freinage devient supérieure à une valeur prévue.

8. Frein de roue selon les revendications 5 et 6,
caractérisé en ce que ledit passage (36) et ledit clapet (37) sont disposés dans ledit organe mobile de distribution de fluide (34).

9. Frein de roue selon l'une quelconque des revendications 1 à 8,
caractérisé en ce que l'un (2) desdits disques de freinage est monté coulissant parallèlement à l'axe (X-X) de la roue et en ce que, à la périphérie desdits disques, ledit frein comporte un étrier unique (9), également monté coulissant parallèlement audit axe de la roue, portant lesdits premier et second vérins.

10. Frein de roue selon la revendication 9,
caractérisé en ce que lesdits moyens d'interruption de communication (28,34) sont portés par ledit étrier unique.

## Claims

1. A wheel brake comprising:
at least one metal brake disk (1) and at least one carbon brake disk (2);
a brake fluid feed (19) for feeding brake fluid under pressure; and
a pressure system (9, 13, 14) connected to said brake fluid feed (19) and acting on said brake disks (1, 2);
characterized in that:
said pressure system comprises first (13) and second (14) actuators, said actuators being associated respectively with said metal disk (1) and with said carbon disk (2), the pistons (15, 16) of said actuators (13, 14) being capable of being subjected to the action of respective resilient return means (17, 18) tending to move said pistons away from said disks;
said first and second actuators are fed with brake fluid from said feed (19) via respective parallel connections (26, 27); and
interruption means (28, 29, 30-34 to 39) responsive to the action of the pressure of said brake fluid are disposed on the connection (26) connecting said feed (19) to said first actuator (13) associated with said metal disk (1) to allow communication between said first actuator (13) and said feed (19) only when the pressure of said brake fluid is below a limit pressure threshold.

2. A wheel brake according to claim 1, characterized in that said interruption means are constituted by a valve or the like (28, 30) loaded by a spring (31) tending to move said valve away from its seat (29).

3. A wheel brake according to claim 2, characterized in that said resilient return means (18) for the piston (16) of said second actuator (14) associated with said carbon disk (2) are rated so that said piston (16) of said second actuator (14) is pressed against said carbon disk (2) only from a pressure value of said brake fluid that is substantially equal to said limit pressure threshold.

4. A wheel brake according to claim 1, characterized in that said interruption means (34) further include means (35, 36, 37) allowing brake fluid under pressure to flow towards said second actuator associated with said carbon disk only when the pressure of said brake fluid is substantially equal to said limit pressure threshold.

5. A wheel brake according to claim 4, characterized in that said interruption means (34) include a non-return valve (37) subjected to thrust from a weak spring (38) and subjected in the closure direction to the action of the pressure of the brake fluid, the non-return valve closing a passage (36) connecting the connection associated with said second actuator to said feed when the pressure is below the minimum value required for feeding the second actuator.

6. A wheel brake according to claim 4, characterized in that said interruption means include a moving distribution valve member (34) disposed inside a housing (25) and connected firstly to said brake fluid feed (19) and secondly to said connections (26, 27) associated with said first and second actuators.

7. A wheel brake according to claim 4, characterized in that said means (35, 36, 37) allowing brake fluid under pressure to flow towards said second actuator associated with said carbon disk only when the pressure of said brake fluid is substantially equal to said limit pressure threshold, nevertheless include a hydraulic passage of very small section for the purpose of cancelling the effect thereof if braking continues for a length of time exceeding a predetermined value.

8. A wheel brake according to claims 5 and 6, characterized in that said passage (36) and said non-return valve (37) are disposed inside said moving distribution valve member (34).

9. A wheel brake according to any one of claims 1 to 8, characterized in that one (2) of said brake disks is mounted to slide parallel to the axis (X-X) of the wheel, and in that said brake includes a single caliper unit (9) at the periphery of said disks and likewise mounted to slide parallel to said wheel axis, said caliper unit carrying said first and second actuators.

10. A wheel brake according to claim 9, characterized in that said interruption means (28, 34) are carried by said single caliper unit.

## Patentansprüche

1. Radbremse mit:
- mindestens einer Metallbremsscheibe (1) und mindestens einer Kohlebremsscheibe (2);
- einer Versorgung (19) mit Bremsmedium unter Druck; und
- einem Drucksystem (9,13,14), das mit der Versorgung (19) mit Bremsmedium verbunden ist und auf die Bremsscheiben (1,2) wirkt;
dadurch gekennzeichnet, daß:
- das Drucksystem einen ersten (13) und einen zweiten (14) Zylinder hat, wobei die Zylinder der Metallscheibe (1) bzw. der Kohlescheibe (2) zugeordnet sind und die Kolben (15,16) der Zylinder (13,14) von entsprechenden elastischen Rückholmitteln (17,18) betätigt werden können, durch die die Kolben von den Scheiben abgestellt werden können;
- der erste und zweite Zylinder aus der Versorgung (19) über entsprechende parallele Verbindungen (26,27) mit Bremsmedium versorgt werden; und
- Abschaltmittel (28,29,30-34 bis 39), die auf den Druck des Bremsmediums ansprechen, in der Verbindung (26) zwischen Versorgung (19) und dem ersten der Metallscheibe (1) zugeordneten Zylinder (13) angeordnet sind, die eine Verbindung zwischen dem ersten Zylinder (13) und der Versorgung (19) nur ermöglichen, wenn der Druck des Bremsmediums kleiner als eine Grenzdruckschwelle ist.

2. Radbremse nach Anspruch 1,
dadurch gekennzeichnet, daß die Abschaltmittel aus einem von einer Feder (31) belasteten Ventil oder ähnlichem (28,30) bestehen, durch die das Ventil von seinem Sitz (29) abgehoben wird.

3. Radbremse nach Anspruch 2,
dadurch gekennzeichnet, daß die elastischen Rückholmittel (18) des Kolbens (16) des zweiten Zylinders (14), der der Kohlescheibe (2) zugeordnet ist, so eingestellt sind, daß der Kolben (16) des zweiten Zylinders (14) erst von einem Druckwert des Bremsmediums an gegen die Kohlescheibe (2) gedrückt wird, der etwa gleich der Grenzdruckschwelle ist.

4. Radbremse nach Anspruch 1,
dadurch gekennzeichnet, daß die Abschaltmittel (34) außerdem Mittel (35,36,37) haben, die ein Strömen des Bremsmediums unter Druck zum zweiten, der Kohlescheibe zugeordneten Zylinder nur ermöglichen, wenn der Druck des Bremsmediums etwa gleich der Grenzdruckschwelle ist.

5. Radbremse nach Anspruch 4,
dadurch gekennzeichnet, daß die Abschaltmittel (34) eine von einer leichten Feder (38) betätigte Klappe (37) haben, die in Schließrichtung der Druckwirkung des Bremsmediums ausgesetzt ist und eine Durchlaßöffnung (36) verschließt, die die dem zweiten Zylinder zugeordnete Verbindung mit der Versorgung verbindet, wenn der Druck kleiner als der für die Versorgung des zweiten Zylinders geforderte kleinste Wert ist.

6. Radbremse nach Anspruch 4,
dadurch gekennzeichnet, daß die Abschaltmittel ein bewegliches Verteilungsorgan (34) innerhalb einer Kammer (25) haben, das einerseits mit der Versorgung mit Bremsmedium (19) und andererseits mit den dem ersten und zweiten Zylinder zugeordneten Verbindungen (26,27) verbunden ist.

7. Radbremse nach Anspruch 4,
dadurch gekennzeichnet, daß die Mittel (35,36,37), die ein Strömen des Bremsmediums unter Druck zum zweiten der Kohlescheibe zugeordneten Zylinder nur ermöglichen, wenn der Druck des Bremsmediums etwa gleich der Grenzdruckschwelle ist, jedoch mindestens einen Hydraulikdurchlaß von sehr kleinem Querschnitt haben, durch den deren Wirkung aufgehoben wird, wenn die Bremsdauer einen vorgesehenen Wert überschreitet.

8. Radbremse nach Anspruch 5 und 6,
dadurch gekennzeichnet, daß der Durchlaß (36) und die Klappe (37) im beweglichen Organ zur Verteilung des Bremsmediums (34) angeordnet sind.

9. Radbremse nach einem der Ansprüche 1 bis 8,
dadurch gekennzeichnet, daß eine (2) der Bremsscheiben parallel zur Achse (X-X) des Rades verschiebbar angebracht ist, und dadurch, daß die Bremse am Umfang der Scheiben einen einzigen Sattel (9) hat, der ebenfalls parallel zur Achse des Rades verschiebbar angebracht ist und Träger des ersten und zweiten Zylinders ist.

10. Radbremse nach Anspruch 9,
dadurch gekennzeichnet, daß sich die Abschaltmittel (28,34) auf dem einzigen Sattel befinden.
